# EUROPEAN PATENT APPLICATION

(11) **EP 4 664 935 A1**
(43) Date of publication of application: **17.12.2025**
(21) Application number: 23920892.9
(22) Date of filing: 15.12.2023
(51) Int. Cl.: H04W 4/029

(54) **LOCATION METHOD AND APPARATUS, AND TERMINAL AND NETWORK DEVICE**

(30) Priority: 10.02.2023 CN 202310098739
(71) Applicant: Datang Mobile Communications Equipment Co., Ltd., Beijing 100085 (CN)
(72) Inventor: ZHAO, Xiaoxue, Beijing 100085 (CN); HOU, Yunjing, Beijing 100085 (CN); AI, Ming, Beijing 100085 (CN); WAN, Qing, Beijing 100085 (CN); WANG, Baixiao, Beijing 100085 (CN)
(74) Representative: Studio Torta S.p.A.
(86) International application number: PCT/CN2023/139079
(87) International publication number: WO 2024/164703

(57) **Abstract**

Embodiments of the present disclosure provide a positioning method and apparatus, a terminal and a network device. The method includes: determining a positioning mode of a terminal based on first information, where the positioning mode includes control plane connection-based positioning and/or user plane connection-based positioning, and the first information includes one or more of a registration status of the terminal, a session type of the terminal, a user plane connection status of the terminal, a cause for failure of user plane establishment of the terminal, or a specified positioning mode of the terminal. In the method, the positioning mode of the terminal is determined based on one or more of the terminal's registration status, the terminal's session type, the terminal's user plane connection status, the cause for failure of the terminal's user plane establishment, the terminal's specified positioning mode, or a positioning load status.

## Description

### CROSS-REFERENCE TO RELATED APPLICATION

The present application claims a priority of Chinese Patent Application No. 202310098739.X entitled "POSITIONING METHOD AND APPARATUS, TERMINAL AND NETWORK DEVICE" and filed on February 10, 2023, which is hereby incorporated by reference in its entirety.

### TECHNICAL FIELD

The present disclosure relates to the field of radio technology, particularly to a positioning method and apparatus, a terminal and a network device.

### BACKGROUND

**In** conventional communication protocols, the location management function (LMF) typically determines whether to continue a positioning procedure via a user plane based on "user plane location capability" indication from a terminal, positioning methods and modes supported by the terminal, control plane load, service type, client type, positioning latency type, and the required positioning quality of service (QoS).

In the conventional method, a positioning mode is determined based on the above information only, and a real-time status of the terminal is not taken into account in determining whether to use control plane connection-based positioning or user plane connection-based positioning, which introduces significant delay or even leads to an erroneous decision.

### SUMMARY

An objective of the present disclosure is to provide a positioning method and apparatus, a terminal and a network device, to solve the prior-art problem of a large positioning delay or even an erroneous decision caused by that a real-time status of the terminal is not used as a basis for determining a positioning mode of the terminal.

An embodiment of the present disclosure provides a positioning method, performed by a first functional entity. The method includes:
determining a positioning mode of a terminal based on first information, where the positioning mode includes control plane connection-based positioning and/or user plane connection-based positioning, and the first information includes one or more of a registration status of the terminal, a session type of the terminal, a user plane connection status of the terminal, a cause for a failure of user plane establishment of the terminal, a specified positioning mode of the terminal, or a positioning load status; and
transmitting a positioning message by using the positioning mode.

Optionally, in the positioning method, in a case that the first information includes the user plane connection status of the terminal, the determining the positioning mode of the terminal based on the first information includes:
determining the positioning mode of the terminal as the control plane connection-based positioning, when the user plane connection of the terminal enters a deactivated state or is released; and/or,
determining the positioning mode of the terminal as the user plane connection-based positioning, when the user plane connection of the terminal enters an activated state.

Optionally, the positioning method further includes:
in a case that the user plane connection of the terminal is in the deactivated state or is released, when a positioning message transmitted by the terminal through a user plane is obtained, determining that the user plane connection of the terminal enters the activated state.

Optionally, the positioning method further includes:
transmitting a first request to a second functional entity, where the first request is configured to subscribe to the first information; and
receiving a first notification message transmitted by the second functional entity, where the first notification message includes one or more of a user plane connection recovery indication for indicating that a user plane connection of the terminal enters an activated state, or the first information subscribed to by the first request.

Optionally, the positioning method further includes:
receiving the first information transmitted by a second functional entity.

Optionally, in the positioning method, a registration status in the first information indicates a non-emergency status; and/or a session type in the first information indicates a non-emergency type.

Optionally, the positioning method further includes:
receiving a second request transmitted by a second functional entity, where the second request is configured to request that the positioning mode of the terminal is the control plane connection-based positioning, and the second request is transmitted in at least one of following cases: the registration status of the terminal is an emergency status or the session type of the terminal is an emergency type; and
transmitting the positioning message by using the control plane connection-based positioning according to the second request.

An embodiment of the present disclosure further provides a positioning method, performed by a second functional entity, including:
transmitting first information to a first functional entity, where the first information includes one or more of a registration status of a terminal, a session type of the terminal, a user plane connection status of the terminal, a cause for a failure of user plane establishment of the terminal, a specified positioning mode of the terminal, or a positioning load status.

Optionally, the positioning method further includes: receiving a first request transmitted by the first functional entity, where the first request is configured to subscribe to the first information, where the transmitting the first information to the first functional entity includes: transmitting a first notification message to the first functional entity, where the first notification message includes one or more of a user plane connection recovery indication for indicating that a user plane connection of the terminal enters an activated state, or the first information subscribed to by the first request.

Optionally, in the positioning method, a registration status in the first information indicates a non-emergency status; and/or a session type in the first information indicates a non-emergency type.

Optionally, the positioning method further includes: transmitting a second request to the first functional entity, when it is determined that the registration status of the terminal is an emergency status and/or the session type of the terminal is an emergency type, where the second request is configured to request that a positioning mode of the terminal is control plane connection-based positioning.

Optionally, in the positioning method, the transmitting the first information to the first functional entity includes: after transmitting a second notification message to the terminal for notifying the terminal to establish a user plane connection, when user plane connection failure information transmitted by the terminal is received, transmitting a third notification message to the first functional entity, where the third notification message includes the first information, and the first information includes one or more of the cause for the failure of user plane establishment of the terminal, or the specified positioning mode of the terminal.

Optionally, the positioning method further includes:
transmitting a location privacy verification notification to the terminal; and
obtaining a fourth notification message transmitted by the terminal based on the location privacy verification notification, where the fourth notification message includes the specified positioning mode of the terminal,
where the transmitting the first information to the first functional entity includes:
   transmitting the first information to the first functional entity after obtaining the fourth notification message, where the first information includes the specified positioning mode of the terminal.

An embodiment of the present disclosure further provides a positioning method, performed by a terminal, including:
determining a positioning mode of the terminal based on first information, where the positioning mode includes control plane connection-based positioning and/or user plane connection-based positioning, and the first information includes one or more of a registration status of the terminal, a session type of the terminal, a user plane connection status of the terminal, a cause for a failure of user plane establishment of the terminal, a specified positioning mode of the terminal, or a positioning load status; and
transmitting a positioning message to a third functional entity by using the positioning mode.

Optionally, in the positioning method, in a case that the first information includes the user plane connection status of the terminal, the determining the positioning mode of the terminal based on the first information includes:
determining the positioning mode of the terminal as the control plane connection-based positioning, when the user plane connection of the terminal enters a deactivated state or is released; and/or
determining the positioning mode of the terminal as the user plane connection-based positioning, when the user plane connection of the terminal enters an activated state.

Optionally, in the positioning method, the determining the positioning mode of the terminal based on the first information includes:
determining the positioning mode of the terminal as the control plane connection-based positioning, when it is determined that the registration status of the terminal is an emergency status and/or the session type of the terminal is an emergency type.

Optionally, the positioning method further includes:
receiving a second notification message transmitted by a second functional entity, the second notification message being used for notifying the terminal to establish a user plane connection; and
transmitting user plane connection failure information to the second functional entity, when a first condition is met, where the user plane connection failure information includes one or more of the cause for the failure of user plane establishment of the terminal, or the specified positioning mode of the terminal.

Optionally, the positioning method further includes:
receiving a location privacy verification notification transmitted by a second functional entity; and
transmitting a fourth notification message to the second functional entity according to the location privacy verification notification, where the fourth notification message includes the specified positioning mode of the terminal.

Optionally, in the positioning method, the transmitting the fourth notification message to the second functional entity includes: transmitting the fourth notification message to the second functional entity for indicating that the specified positioning mode is the control plane connection-based positioning, when a first condition is met.

Optionally, in the positioning method, the first condition includes one or more of the following:
a current remaining battery level of the terminal is less than a first preset value;
an access delay of the terminal is greater than a second preset value;
it is determined that an Internet of things (IoT) device refuses to establish a positioning user plane connection for the terminal;
the registration status of the terminal is an emergency status; or
the session type of the terminal is an emergency type.

An embodiment of the present disclosure further provides a network device, including: a memory, a transceiver and a processor, where the memory is configured to store a computer program; the transceiver is configured to receive and transmit data under the control of the processor; and the processor is configured to read the computer program from the memory to perform the following steps:
determining a positioning mode of a terminal based on first information, where the positioning mode includes control plane connection-based positioning and/or user plane connection-based positioning, and the first information includes one or more of a registration status of the terminal, a session type of the terminal, a user plane connection status of the terminal, a cause for a failure of user plane establishment of the terminal, a specified positioning mode of the terminal, or a positioning load status; and
transmitting a positioning message by using the positioning mode.

Optionally, in the network device, in a case that the first information includes the user plane connection status of the terminal, the determining the positioning mode of the terminal based on the first information includes:
determining the positioning mode of the terminal as the control plane connection-based positioning, when the user plane connection of the terminal enters a deactivated state or is released; and/or,
determining the positioning mode of the terminal as the user plane connection-based positioning, when the user plane connection of the terminal enters an activated state.

Optionally, in the network device, the processor is further configured to: in a case that the user plane connection of the terminal is in the deactivated state or is released, when a positioning message transmitted by the terminal through a user plane is obtained, determine that the user plane connection of the terminal enters the activated state.

Optionally, in the network device, the processor is further configured to:
transmit a first request to a second functional entity, where the first request is configured to subscribe to the first information; and
receive a first notification message transmitted by the second functional entity, where the first notification message includes one or more of a user plane connection recovery indication for indicating that a user plane connection of the terminal enters an activated state, or the first information subscribed to by the first request.

Optionally, in the network device, the processor is further configured to: receive the first information transmitted by a second functional entity.

Optionally, in the network device, a registration status in the first information indicates a non-emergency status; and/or a session type in the first information indicates a non-emergency type.

Optionally, in the network device, the processor is further configured to:
receive a second request transmitted by a second functional entity, where the second request is configured to request that the positioning mode of the terminal is the control plane connection-based positioning, and the second request is transmitted in at least one of following cases: the registration status of the terminal is an emergency status or the session type of the terminal is an emergency type; and
transmit the positioning message by using the control plane connection-based positioning according to the second request.

An embodiment of the present disclosure further provides a network device, including: a memory, a transceiver and a processor. The memory is configured to store a computer program; the transceiver is configured to receive and transmit data under the control of the processor; and the processor is configured to read the computer program from the memory to perform the following step: transmitting first information to a first functional entity, where the first information includes one or more of a registration status of a terminal, a session type of the terminal, a user plane connection status of the terminal, a cause for a failure of user plane establishment of the terminal, a specified positioning mode of the terminal, or a positioning load status.

Optionally, in the network device, the processor is further configured to: receive a first request transmitted by the first functional entity, where the first request is configured to subscribe to the first information, where the transmitting the first information to the first functional entity includes: transmitting a first notification message to the first functional entity, where the first notification message includes one or more of a user plane connection recovery indication for indicating that a user plane connection of the terminal enters an activated state, or the first information subscribed to by the first request.

Optionally, in the network device, a registration status in the first information indicates a non-emergency status; and/or a session type in the first information indicates a non-emergency type.

Optionally, in the network device, the processor is further configured to: transmit a second request to the first functional entity, when it is determined that the registration status of the terminal is an emergency status and/or the session type of the terminal is an emergency type, where the second request is configured to request that a positioning mode of the terminal is control plane connection-based positioning.

Optionally, in the network device, the transmitting the first information to the first functional entity includes: after transmitting a second notification message to the terminal for notifying the terminal to establish a user plane connection, when user plane connection failure information transmitted by the terminal is received, transmitting a third notification message to the first functional entity, where the third notification message includes the first information, and the first information includes one or more of the cause for the failure of user plane establishment of the terminal, or the specified positioning mode of the terminal.

Optionally, in the network device, the processor is further configured to:
transmit a location privacy verification notification to the terminal; and
obtain a fourth notification message transmitted by the terminal based on the location privacy verification notification, where the fourth notification message includes the specified positioning mode of the terminal, where the transmitting the first information to the first functional entity includes:
   transmitting the first information to the first functional entity after obtaining the fourth notification message, where the first information includes the specified positioning mode of the terminal.

An embodiment of the present disclosure further provides a terminal, including: a memory, a transceiver and a processor, where the memory is configured to store a computer program; the transceiver is configured to receive and transmit data under the control of the processor; and the processor is configured to read the computer program from the memory to perform the following steps:
determining a positioning mode of the terminal based on first information, where the positioning mode includes control plane connection-based positioning and/or user plane connection-based positioning, and the first information includes one or more of a registration status of the terminal, a session type of the terminal, a user plane connection status of the terminal, a cause for a failure of user plane establishment of the terminal, a specified positioning mode of the terminal, or a positioning load status; and
transmitting a positioning message to a third functional entity by using the positioning mode.

Optionally, in the terminal, in a case that the first information includes the user plane connection status of the terminal, the determining the positioning mode of the terminal based on the first information includes:
determining the positioning mode of the terminal as the control plane connection-based positioning, when the user plane connection of the terminal enters a deactivated state or is released; and/or
determining the positioning mode of the terminal as the user plane connection-based positioning, when the user plane connection of the terminal enters an activated state.

Optionally, in the terminal, the determining the positioning mode of the terminal based on the first information includes: determining the positioning mode of the terminal as the control plane connection-based positioning, when it is determined that the registration status of the terminal is an emergency status and/or the session type of the terminal is an emergency type.

Optionally, in the terminal, the processor is further configured to:
receive a second notification message transmitted by a second functional entity, the second notification message being used for notifying the terminal to establish a user plane connection; and
transmit user plane connection failure information to the second functional entity, when a first condition is met, where the user plane connection failure information includes one or more of the cause for the failure of user plane establishment of the terminal, or the specified positioning mode of the terminal.

Optionally, in the terminal, the processor is further configured to:
receive a location privacy verification notification transmitted by a second functional entity; and
transmit a fourth notification message to the second functional entity according to the location privacy verification notification, where the fourth notification message includes the specified positioning mode of the terminal.

Optionally, in the terminal, the transmitting the fourth notification message to the second functional entity includes: transmitting the fourth notification message to the second functional entity for indicating that the specified positioning mode is the control plane connection-based positioning, when a first condition is met.

Optionally, in the terminal, the first condition includes one or more of the following:
a current remaining battery level of the terminal is less than a first preset value;
an access delay of the terminal is greater than a second preset value;
it is determined that an Internet of things (IoT) device refuses to establish a positioning user plane connection for the terminal;
the registration status of the terminal is an emergency status; or
the session type of the terminal is an emergency type.

An embodiment of the present disclosure further provides a positioning apparatus, applied to a first functional entity, including:
a first processing unit, configured to determine a positioning mode of a terminal based on first information, where the positioning mode includes control plane connection-based positioning and/or user plane connection-based positioning, and the first information includes one or more of a registration status of the terminal, a session type of the terminal, a user plane connection status of the terminal, a cause for a failure of user plane establishment of the terminal, a specified positioning mode of the terminal, or a positioning load status; and
a first transmitting unit, configured to transmit a positioning message by using the positioning mode.

An embodiment of the present disclosure further provides a positioning apparatus, applied to a second functional entity, including: a second transmitting unit, configured to transmit first information to a first functional entity, where the first information includes one or more of a registration status of a terminal, a session type of the terminal, a user plane connection status of the terminal, a cause for a failure of user plane establishment of the terminal, a specified positioning mode of the terminal, or a positioning load status.

An embodiment of the present disclosure further provides a positioning apparatus, applied to a terminal, including:
a second processing unit, configured to determine a positioning mode of the terminal based on first information, where the positioning mode includes control plane connection-based positioning and/or user plane connection-based positioning, and the first information includes one or more of a registration status of the terminal, a session type of the terminal, a user plane connection status of the terminal, a cause for a failure of user plane establishment of the terminal, a specified positioning mode of the terminal, or a positioning load status; and
a third transmitting unit, configured to transmit a positioning message to a third functional entity by using the positioning mode.

An embodiment of the present disclosure further provides a processor readable storage medium, where the processor readable storage medium stores a computer program for causing a processor to perform steps in any one of the foregoing positioning methods.

The above-mentioned technical solutions of the present disclosure have beneficial effects as follow. In the positioning method described in the embodiments of the present disclosure, the positioning mode of the terminal is determined based on one or more of the registration status of the terminal, the session type of the terminal, the user plane connection status of the terminal, the cause for failure of user plane establishment of the terminal, the specified positioning mode of the terminal, or the positioning load status, which enables timely determination of the positioning mode of the terminal based on a real-time status of the terminal, thereby ensuring accurate transmission of positioning messages.

### BRIEF DESCRIPTION OF THE DRAWINGS

FIG. 1 is a schematic diagram of a transmission process of LPP messages;
FIG. 2 is a flow chart of a user plane positioning procedure;
FIG. 3 is a first flow chart of a positioning method according to an embodiment of the present disclosure;
FIG. 4 is a flow chart of a first implementation of the method according to an embodiment of the present disclosure;
FIG. 5 is a flow chart of a second implementation of the method according to an embodiment of the present disclosure;
FIG. 6 is a flow chart of a third implementation of the method according to an embodiment of the present disclosure;
FIG. 7 is a flow chart of a fourth implementation of the method according to an embodiment of the present disclosure;
FIG. 8 is a flow chart of a fifth implementation of the method according to an embodiment of the present disclosure;
FIG. 9 is a second flow chart of a positioning method according to an embodiment of the present disclosure;
FIG. 10 is a third flow chart of a positioning method according to an embodiment of the present disclosure;
FIG. 11 is a first schematic structural diagram of a network device according to an embodiment of the present disclosure;
FIG. 12 is a second schematic structural diagram of a network device according to an embodiment of the present disclosure;
FIG. 13 is a schematic structural diagram of a terminal according to an embodiment of the present disclosure;
FIG. 14 is a first structural schematic diagram of a positioning apparatus according to an embodiment of the present disclosure;
FIG. 15 is a second schematic structural diagram of a positioning apparatus according to an embodiment of the present disclosure; and
FIG. 16 is a third schematic structural diagram of a positioning apparatus according to an embodiment of the present disclosure.

### DETAILED DESCRIPTION

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

The term "and/or" in the embodiments of the present disclosure describes the association relationship of associated objects and indicates that there may be three types of relationships. For example, A and/or B may represent three situations including: A alone, both A and B, and B alone. The character "/" generally indicates that the associated objects are in an "or" relationship.

The term "multiple" used in the embodiments of the present disclosure refers to two or more, and other quantifiers are similar thereto.

The technical solution according to embodiments of the present disclosure may be applied to various systems, particularly to a 5th generation mobile communication technology (5G) system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, and a 5G New Radio (NR) system. Each of the various systems includes a terminal and a network device. The systems may further include a core network portion, e.g., an evolved packet system (EPS), or a 5G system (5GS).

Firstly, contents involved in solutions provided by embodiments of the present disclosure will be introduced below.

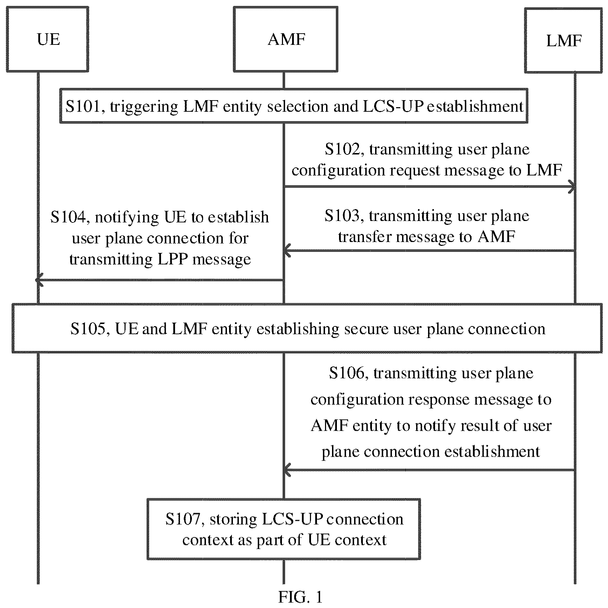

As shown in FIG. 1, FIG. 1 is a schematic diagram of a transmission process of LTE positioning protocol (LPP) messages in the conventional technology. The transmission processes include the following steps:
step S101, an access and mobility management function (AMF) entity triggers a location management function (LMF) to perform entity selection and LCS user plane (LCS-UP) establishment;
step S102, the AMF entity transmits a user plane configuration request message (e.g., N1mf_Location_UPConfig(UP info) Request message) to the LMF entity;
step S103, the LMF entity transmits a user plane transfer message (e.g., Namf_Communication_N1N2MessageTransfer(UP info) message) to the AMF entity, where the user plane transfer message includes an IP address or a fully qualified domain name (FQDN) address of the LMF entity, a terminal temporary identifier, and a security credential;
step S104, the AMF entity transmits a non-access layer transmission message to user equipment (UE), to notify the UE to establish a user plane (UP) connection for transmitting a LPP message;
step S105, the UE and the LMF entity establish a secure user plane connection using a secure credential;
step S106, the LMF entity transmits a user plane configuration response message (e.g., an Nlmf_Location_UPConfig Response message) to the AMF entity, to notify them of a result of user plane connection establishment; and
step S107, the AMF entity stores LCS-UP connection context as part of UE context.

By utilizing the above message transmission process, a secure user plane connection may be established between the UE and LMF entity, enabling user plane connection-based positioning of the UE.

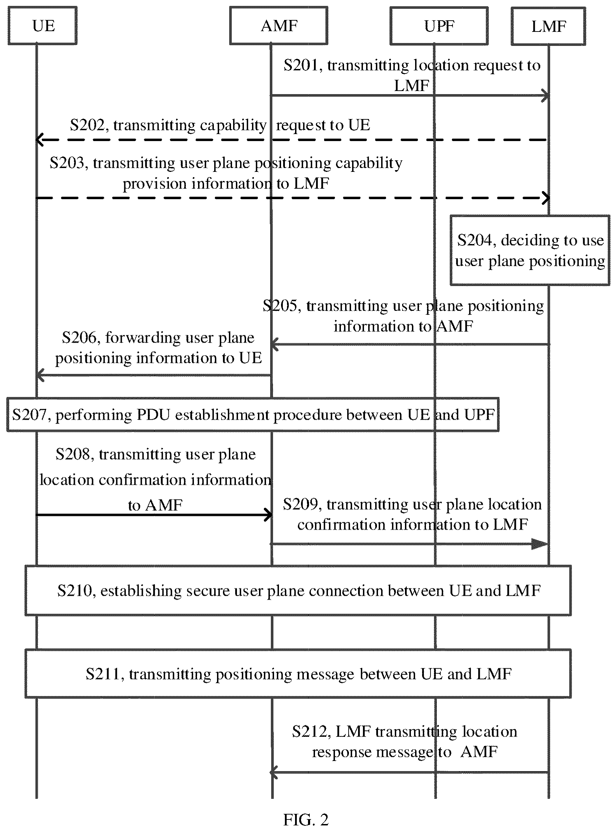

In addition, during the user plane positioning procedure, the terminal registers and triggers establishment of a protocol data unit (PDU) session and a PDU establishment procedure. As shown in FIG. 2, the user plane positioning procedure further includes the following steps:
step S201, the AMF entity transmits a location request to the LMF entity;
step S202, the LMF entity transmits a capability request to the UE;
step S203, the UE transmits user plane positioning capability provision information to the LMF entity;
step S204, the LMF entity decides to use user plane positioning;
step S205, the LMF entity transmits user plane positioning information to the AMF entity;
step S206, the AMF entity forwards the user plane positioning information to the UE;
step S207, a PDU establishment procedure is performed between the UE and the UPF;
step S208, the UE transmits user plane location confirmation information to the AMF entity;
step S209, the AMF entity transmits the user plane location confirmation information to the LMF entity,
step S210, a secure user plane connection is established between UE and the LMF entity;
step S211, a positioning message is transmitted between the UE and the LMF entity through a user plane connection-based positioning mode; and
step S212, the LMF entity transmits a location response message to the AMF entity.

In the user plane positioning procedure, in step S204, the LMF entity determines whether to continue the positioning procedure based on the "user plane positioning capability" indication of the terminal, positioning modes and modes supported by the terminal, a control plane load, a service type, a client type, a positioning delay type, a required quality of service (QoS) obtained in step S201, or in step S202 and step S203. If user plane connection context of the target terminal already exists in the LMF entity, steps S205 to S210 are skipped, and step S211 is directly performed.

During the implementation process, the LMF entity determines whether to continue the positioning procedure through the user plane connection only based on the "user plane positioning capability" indication of the terminal, the positioning modes and modes supported by the terminal, the control plane load, the service type, the client type, the positioning delay type, the required QoS, without considering a real-time status of the terminal. The determining the positioning method only based on the above information has a problem of introducing significant delay and even resulting an erroneous decision. An embodiment of the present disclosure provides a positioning method, where a positioning mode of a terminal is determined based on one or more of a registration status of the terminal, a session type of the terminal, a user plane connection status of the terminal, a cause for failure of user plane establishment of the terminal, a specified positioning mode of the terminal, or a positioning load status, so as to timely determine the positioning mode of the terminal based on a real-time status of the terminal and to ensure accurate transmission of a positioning message.

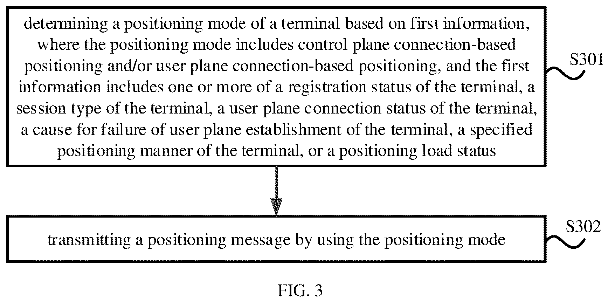

An embodiment of the present disclosure provides a positioning method, which is performed by a first functional entity. As shown in FIG. 3, the method includes:
step S301, determining a positioning mode of a terminal based on first information, where the positioning mode includes control plane connection-based positioning and/or user plane connection-based positioning, and the first information includes one or more of a registration status of the terminal, a session type of the terminal, a user plane connection status of the terminal, a cause for failure of user plane establishment of the terminal, a specified positioning mode of the terminal, or a positioning load status; and
step S302, transmitting a positioning message by using the positioning mode.

In an embodiment of the present disclosure, the first functional entity may optionally be any one of LMF, AMF, or AF.

With the positioning method according to the embodiment, the first functional entity may determine the positioning mode of the terminal based on one or more of the following information of the first information:
the registration status of the terminal; the registration status may be an emergency registration status or a non-emergency registration status;
the session type; optionally, the session type is a type of a PDU session; and the session type may be an emergency session type or a non-emergency session type;
the user plane connection status; the user plane connection status may include one or more of a user plane transmission control protocol (TCP) connection interruption status, or a user plane connection recovery status after interruption;
the cause for the failure of user plane establishment; the cause for the failure of user plane establishment may include one or more of the following: a current remaining battery level of the terminal is less than a first preset value, an access delay of the terminal is greater than a second preset value, it is determined that an Internet of things (IoT) device refuses to establish a positioning user plane connection for the terminal, the registration status of the terminal is an emergency status; or the session type of the terminal is an emergency type;
the specified positioning mode; the specified positioning mode may be control plane connection-based positioning or user plane connection-based positioning.

The specified positioning mode of the terminal may be a positioning mode provided by the terminal according to positioning habit or positioning preference of the terminal. Optionally, it may be positioning modes provided to the terminal for selecting based on a real-time status such as the registration status, the session type, the user plane connection status, the remaining power, and the access delay. It should be noted that the content of the first information listed above is only an example and is not limited thereto.

In the positioning method according to an embodiment of the present disclosure, in a case that the first information includes the user plane connection status of the terminal, the determining the positioning mode of the terminal based on the first information includes:
determining the positioning mode of the terminal as the control plane connection-based positioning, when the user plane connection of the terminal enters a deactivated state or is released; and/or,
determining the positioning mode of the terminal as the user plane connection-based positioning, when the user plane connection of the terminal enters an activated state.

In the implementation, the first functional entity may determine the positioning mode of the terminal based on the user plane connection status of the terminal.

Specifically, in a case that the user plane connection of the terminal enters a deactivated state or is released, for example, in a case that a user plane connection between the terminal and the LMF entity is interrupted, it may be determined that the positioning mode of the terminal is control plane connection-based positioning when the user plane connection of the terminal enters a deactivated state or is released. In a case that the user plane connection of the terminal enters an activated state, for example, when a user plane connection between the terminal and the LMF entity is recovered from an interruption state to a connected state, it may be determined that the user plane connection of the terminal enters an activated state.

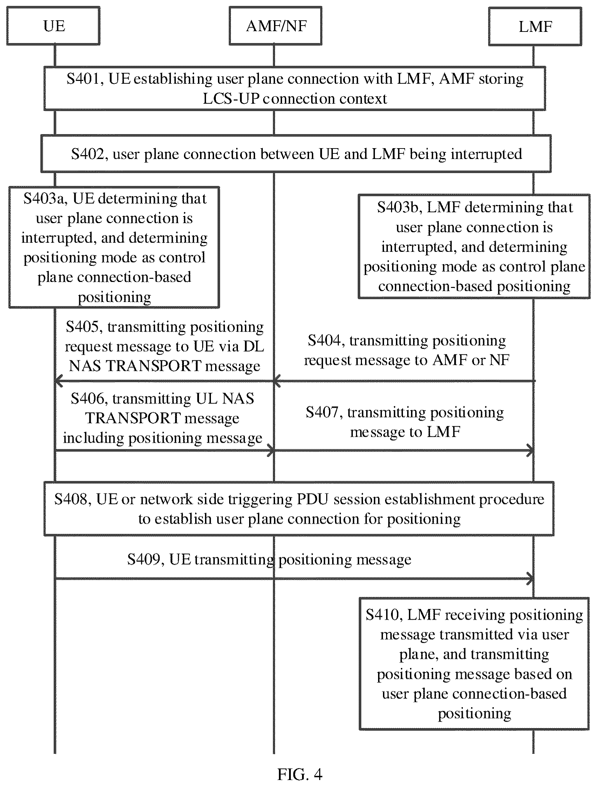

The specific implementation process of the positioning method described in this implementation may be illustrated in FIG. 4, which includes the following steps S401 to S410.

In step S401, a terminal establishes a user plane connection with an LMF entity, and the AMF entity stores LCS-UP connection context; the implementation process of this step may be as shown in FIG. 1 and will not be explained in detail here.

In step S402, the user plane connection between the terminal and LMF entity is interrupted, that is, the user plane connection of the terminal enters a deactivated state or is released. In the implementation step, since TCP connection is used by the user plane between the terminal and the LMF entity, both the terminal and the LMF entity can detect interruption of the user plane connection after the user plane connection is interrupted.

In step S403a, the terminal may receive a PDU connection interruption message transmitted by a lower layer through the application layer, may determine interruption of the user plane connection, and may determine that the positioning mode shall be control plane connection-based positioning. Subsequent positioning messages will be transmitted by using control plane connection-based positioning and a user plane connection establishment request is initiated.

In step S403b, the LMF entity may receive a PDU connection interruption message transmitted by a lower layer through the application layer, may determine interruption of the user plane connection of the terminal, and may determine that the positioning mode of the terminal shall be control plane connection-based positioning. Subsequent positioning messages will be transmitted using control plane connection-based positioning.

**In** step S404, the LMF entity transmits a positioning request message (e.g., Namf_Location_ProvidePositioniong Request message) to the AMF entity or a network function (NF) entity, for transmitting a positioning message to the terminal through the AMF entity or the NF entity.

**In** step S405, the AMF entity or the NF entity transmits the positioning request message to the terminal via a downlink (DL) non access stratum (NAS) transport (TRANSPORT) message.

In step S406, the terminal transmits an uplink non-access layer transport (UL NAS TRANSPORT) message to the AMF entity or the NF entity, which includes the positioning message.

In step S407, the AMF entity or the NF entity transmits the positioning message to the LMF entity.

By using the above steps S404 to S407, the LMF entity and the terminal transmits a positioning message by using control plane-based positioning, after the user plane connection between the terminal and the LMF entity is interrupted, that is, after the user plane connection of the terminal enters a deactivated state or is released,.

In step S408, the terminal or a network-side device triggers a PDU session establishment procedure to establish a user plane connection for positioning.

In step S409, the terminal confirms recovery of the user plane connection, that is, the user plane connection of the terminal enters an activated state, and the positioning mode is determined as user plane connection-based positioning. Therefore, the terminal transmits a positioning message through the user plane connection, and a TCP connection is recovered between the terminal and the LMF entity.

In step S410, the LMF entity receives the positioning message transmitted by the terminal via the user plane, determines that the user plane connection between the terminal and the LMF entity has been recovered. Subsequent positioning messages will be transmitted to the terminal over the user plane connection.

In the implementation, optionally, the method further includes: determining that the user plane connection of the terminal has entered an activated state, in a case that the user plane connection of the terminal is in a deactivated state or released, and the positioning message transmitted by the terminal through the user plane is obtained.

Specifically, according to the above implementation process, after the user plane connection between the terminal and the LMF entity is interrupted, if the LMF entity obtains the positioning message transmitted by the terminal through the user plane, the LMF entity determines that the user plane connection of the terminal has entered the activated state. Subsequent positioning messages will be transmitted to the terminal through the user plane connection.

Based on the implementation, the LMF entity or the AMF entity (first functional entity) may determine the positioning mode of the terminal as control plane connection-based positioning in response to the user plane connection of the terminal entering a deactivated state or being released; and/or, may determine the positioning mode of the terminal as user plane connection-based positioning in response to the user plane connection of the terminal entering an activated state.

In addition, the terminal may also determine the positioning mode of the terminal as control plane connection-based positioning in response to the user plane connection of the terminal entering a deactivated state or being released; and/or, may determine the positioning mode of the terminal as user plane connection-based positioning in response to the user plane connection of the terminal entering an activated state.

In the positioning method according to the embodiments of the present disclosure, in another implementation, the first functional entity may determine the positioning mode of the terminal based on the first information subscribed to the second functional entity.

Optionally, the method further includes:
transmitting, by the first functional entity, a first request to a second functional entity, where the first request is configured to subscribe to the first information; and
receiving, by the first functional entity, a first notification message transmitted by the second functional entity, where the first notification message includes one or more of a user plane connection recovery indication for indicating that a user plane connection of the terminal enters an activated state, or the first information subscribed to by the first request.

In the implementation, optionally, the first functional entity may subscribe to one or more of the registration status of the terminal, the session type of the terminal, or the user plane connection status of the terminal from the second functional entity through the first request.

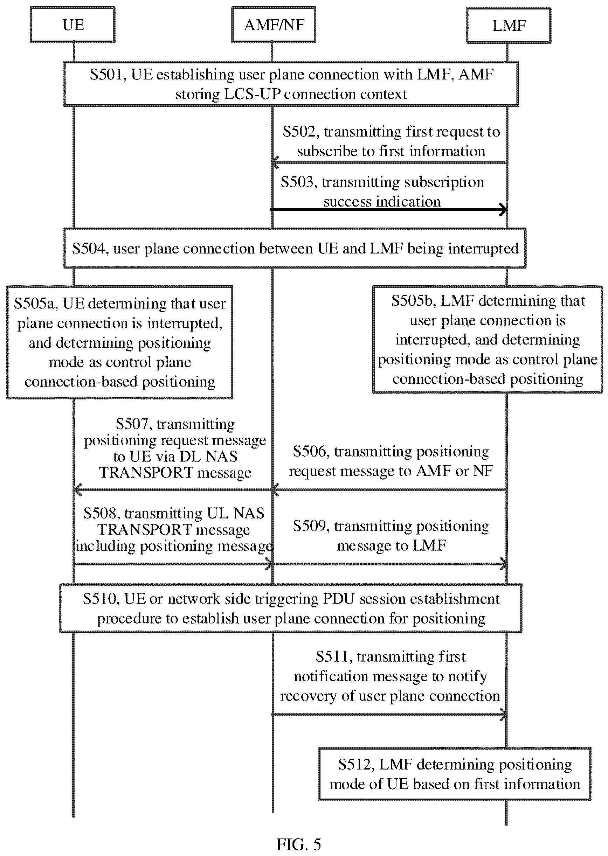

The specific implementation process of the positioning method described in the implementation may be illustrated in FIG. 5, which includes the following steps S501 to S512.

In step S501, a terminal establishes a user plane connection with an LMF entity, and the AMF entity stores LCS-UP connection context. The implementation process of this step may be as shown in FIG. 1 and will not be explained in detail here.

In step S502, the LMF entity transmits a first request (e.g., a Namf_EventExposure_Subscribe Requset message) to the AMF entity or the NF entity to subscribe to one or more of a registration status, a session type, or a user plane connection status of the terminal. Optionally, the first request includes one or more of an event identifier (ID), subscribed event information, or subscribed entity ID.

In step S503, the AMF entity or the NF entity associates the event ID with the subscribed event information, and the subscribed entity ID, specifies an event filter, and transmits a subscription success indication to the LMF entity.

If the LMF entity subscribes to the user plane connection status of the terminal from the AMF entity, the following step S504 may be executed; if the LMF entity only subscribes to a registration status and/or a session type of the terminal from the AMF entity, steps S504 to S510 may be skipped, and step S511 may be executed directly.

In step S504, the user plane connection between the terminal and LMF entity is interrupted; that is, the user plane connection of the terminal enters a deactivated state or is released. In the implementation step, since the user plane between the terminal and the LMF entity uses TCP connection, both the terminal and the LMF entity may detect an interruption of the user plane connection after the user plane connection is interrupted.

In step S505a, the terminal may receive a PDU connection interruption message transmitted by a lower layer through the application layer, may determine interruption of the user plane connection, and may determine that the positioning mode shall be control plane connection-based positioning. Subsequent positioning messages will be transmitted by using control plane connection-based positioning and a user plane connection establishment request is initiated.

In step S505b, the LMF entity may receive a PDU connection interruption message transmitted by a lower layer through the application layer, may determine interruption of the user plane connection of the terminal, and may determine that the positioning mode of the terminal shall be control plane connection-based positioning. Subsequent positioning messages will be transmitted by using control plane connection-based positioning.

In step S506, the LMF entity transmits a positioning request message (e.g., Namf_Location_ProvidePositioniong Request message) to the AMF entity or the NF entity, for transmitting a positioning message to the terminal through the AMF entity or the NF entity.

In step S507, the AMF entity or the NF entity transmits a positioning request message to the terminal through a downlink non-access layer transport (DL NAS TRANSPORT) message.

In step S508, the terminal transmits an uplink non-access layer transport (UL NAS TRANSPORT) message to the AMF entity or the NF entity, and the UL NAS TRANSPORT message includes the positioning message.

In step S509, the AMF entity or the NF entity transmits the positioning message to the LMF entity.

With the above steps S504 to S509, after the LMF entity subscribes to the user plane connection status of the terminal from the AMF entity, if the user plane connection between the terminal and the LMF entity is interrupted, that is, if the user plane connection of the terminal enters a deactivated state or is released, the LMF entity and the terminal use a control plane connection to locate and transmit the positioning message.

In step S510, the terminal or a network-side device triggers a PDU session establishment procedure to establish a user plane connection for positioning.

In step S511, after the PDU for positioning has been established, that is, the user plane connection of the terminal has entered an activated state, the AMF entity transmits a first notification message (e.g., a Namf_EventExposure_Notify message) to the LMF entity, to notify the terminal that the user plane connection has entered an activated state, that is, the user plane connection has been recovered.

Optionally, the first notification message includes one or more of a user plane connection recovery indication for indicating that a user plane connection of the terminal enters an activated state, or the first information subscribed to by the first request.

In step S512, the LMF entity determines a positioning mode of the terminal based on the first information in the first notification message.

Optionally, the determining the positioning mode of the terminal based on the first information includes:
determining the positioning mode of the terminal as the control plane connection-based positioning, in a case that the registration status is emergency; and/or,
determining the positioning mode of the terminal as the user plane connection-based positioning, in a case that the session type is emergency.

In another implementation, optionally, the determining the positioning mode of the terminal based on the first information may further include:
determining the positioning mode of the terminal as the control plane connection-based positioning, in a case that the registration status is non-emergency; and/or,
determining the positioning mode of the terminal as the user plane connection-based positioning, in a case that the session type is non-emergency.

It should be noted that the determining the positioning mode of the terminal based on the first information is not limited to the above implementation manners. For example, in a case that the registration status of the terminal is non-emergency or the session type of the terminal is non-emergency, the positioning mode of the terminal may also be determined as user plane connection-based positioning.

In the implementation, the LMF entity (first functional entity) may determine the positioning mode of the terminal based on one or more of the registration status of the terminal subscribed to the AMF entity, the session type of the terminal, and the user plane connection status of the terminal.

In addition, since the terminal may perceive recovery of the user plane connection, the terminal determines the positioning mode as user plane connection-based positioning when the user plane connection is recovered, and will subsequently use user plane connection to transmit positioning messages. In addition, after the user plane connection is recovered, the terminal may also determine the positioning method based on the registration status and/or the session type.

Therefore, the terminal may also determine the positioning mode of the terminal based on one or more of a registration status of the terminal, a session type of the terminal, or a user plane connection status of the terminal in the first information.

The positioning method according to the embodiments of the present disclosure, in another implementation, the first functional entity may determine the positioning mode of the terminal based on the first information in the notification message transmitted by the second functional entity.

Optionally, in the implementation, the first information included in the notification message transmitted by the second functional entity to the first functional entity includes one or more of the registration status of the terminal, the session type of the terminal, or the user plane connection status of the terminal.

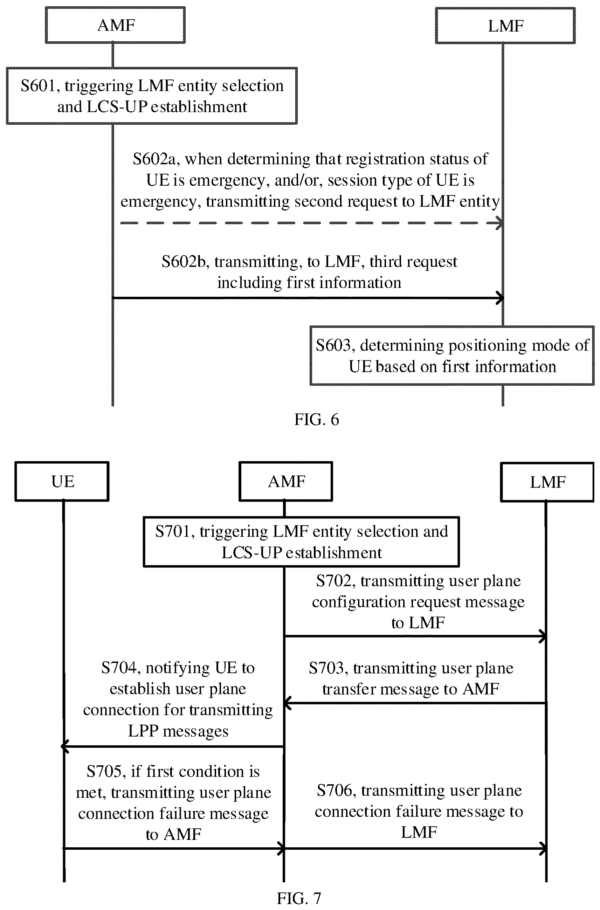

The positioning method in the implementation manner is based on the premise that a gateway mobile location center (GMLC) entity invokes a positioning service (Namf_Location_ProvidePositioningInfo) from the AMF entity. The specific implementation process may be shown in FIG. 6, including the following steps S601 to S603.

In step S601, an AMF entity triggers LMF entity selection and LCS-UP establishment.

In step S602a, when determining that a registration status of a terminal is an emergency status; and/or, a session type of the terminal is an emergency type, the AMF entity transmits a second request (e.g., positioning request: Nlmf_Location_DetermineLocation Request message) to an LMF entity, to request the positioning mode of the terminal to be control plane connection-based positioning. In the implementation, when the AMF entity determines that the registration status of the terminal is an emergency status; and/or, determines that the session type of the terminal is an emergency type, the AMF entity directly transmits a positioning request to the LMF entity for requesting control plane connection-based positioning, and skips step S602b and directly executes step S603.

In step S602b, the AMF entity transmits a third request (e.g., a user plane configuration request: Nlmf_Location_UPConfig (UP info) Request message) to the LMF entity, where the third request includes first information.

Optionally, in an implementation, the registration status in the first information indicates a non-emergency status; and/or the session type in the first information indicates a non-emergency type.

In the implementation, when the AMF entity determines that the registration status of the terminal indicates a non-emergency status, and/or, determines that the session type of the terminal indicates a non-emergency type, the AMF entity transmits a third request to the LMF entity, where the first information in the third request indicates that the registration status of the terminal indicates a non-emergency status; and/or, indicates that the session type of the terminal indicates a non-emergency type;

In another implementation, the AMF entity does not determine whether to transmit a third request to the LMF entity based on the registration status of the terminal and/or the session type of the terminal, that is, regardless of the registration status and/or the session type of the terminal, the AMF entity always transmits the third request to the LMF entity.

The first information in the third request includes one or more of the following information:
a registration status of the terminal;
a session type of the terminal; or
a positioning mode determined based on the user plane connection status.

In step S603, the LMF entity determines the positioning mode of the terminal based on the first information in the third request.

In the implementation, the LMF entity (i.e., the first functional entity) may determine the positioning mode of the terminal based on the first information transmitted by the AMF entity (one or more of the registration status of the terminal, the session type of the terminal, or the positioning mode determined based on the user plane connection status).

In addition, the AMF entity (i.e., the first functional entity) may also determine the positioning mode of the terminal based on the first information transmitted to the LMF entity (one or more of the registration status of the terminal, the session type of the terminal, or the positioning mode determined based on the user plane connection status).

Similarly, the terminal may also determine the positioning mode based on a registration status of the terminal, a session type, and/or a positioning mode determined by the user plane connection status.

The positioning method described in the embodiments of the present disclosure, in another implementation, the first information includes a cause for a failure of establishing a user plane of the terminal and a specified positioning mode of the terminal. The first functional entity may determine the positioning mode of the terminal based on the cause for the failure of establishing the user plane of the terminal and the specified positioning mode of the terminal.

The specific implementation process of using the positioning method described in this implementation may be shown in FIG. 7, including the following steps S701 to S706.

In step S701, an AMF entity triggers LMF entity selection and LCS-UP establishment.

In step S702, the AMF entity transmits a user plane configuration request message to an LMF entity (e.g., N1mf_Location_UPConfig(UP info) Request message).

In step S703, the LMF entity transmits a user plane transfer message (e.g., Namf_Communication_N1N2MessageTransfer(UP info) message) to the AMF entity, where the user plane transfer message includes an IP address or a fully qualified domain name (FQDN) address of the LMF entity, a terminal temporary identifier, and a security credential.

In step S704, the AMF entity transmits a non-access layer transmission message (i.e., a second notification message used to notify a terminal to establish a user plane connection) to the terminal, notifying the UE to establish a UP plane connection for transmitting LPP messages.

In step S705, in a case that the terminal recognizes the non-access layer transmission message transmitted by the AMF entity, recognizes that a terminal temporary identifier is its own temporary identifier, and supports establishment of a user plane connection, the terminal transmits a user plane connection confirmation message to the AMF entity; in a case that the terminal determines that a first condition is met, the terminal transmits a user plane connection failure message to the AMF entity, where the user plane connection failure message includes one or more of a cause for a failure of user plane establishment of the terminal and a specified positioning mode of the terminal.

Optionally, the first condition includes one or more of the following:
a current remaining battery level of the terminal is less than a first preset value;
an access delay of the terminal is greater than a second preset value;
it is determined that an IoT device refuses to establish a positioning user plane connection for the terminal;
the registration status of the terminal is an emergency status; or
the session type of the terminal is an emergency type.

By adopting this implementation, the terminal may refuse to establish a user plane connection based on a current positioning scenario, and may provide feedback on the cause for the failure of user plane establishment and the specified positioning mode of the terminal.

In step S706, the AMF entity transmits the received user plane connection failure information to the LMF entity. Optionally, the user plane connection failure message is transmitted to the LMF entity through Namf_Communication_N1MessageNotify message.

Based on the above steps, the LMF entity receives user plane connection failure information. If a specified positioning mode in the user plane connection failure information is to use control plane connection-based positioning, the LMF entity initiates a control plane positioning procedure.

In the implementation, the receiving, by the LMF entity, the first information transmitted by the AMF entity includes: receiving, by the LMF entity, a third notification message transmitted by the AMF entity, where the third notification message includes the first information. The first information includes one or more of a cause for a failure of user plane establishment of the terminal and a specified positioning mode of the terminal. After transmitting the second notification message to the terminal to notify the terminal to establish a user plane connection, the AMF entity transmits the third notification message to the LMF entity, if the AMF entity receives the user plane connection failure information transmitted by the terminal.

By adopting this implementation, the LMF entity and the terminal can determine the positioning mode of the terminal, based on the cause for the failure of the user plane establishment of the terminal and the specified positioning mode of the terminal.

In another implementation of the embodiments of the present disclosure, the terminal may transmit the specified positioning mode in the received location privacy verification notification, so that the LMF entity can determine the positioning mode of the terminal based on the obtained specified positioning mode.

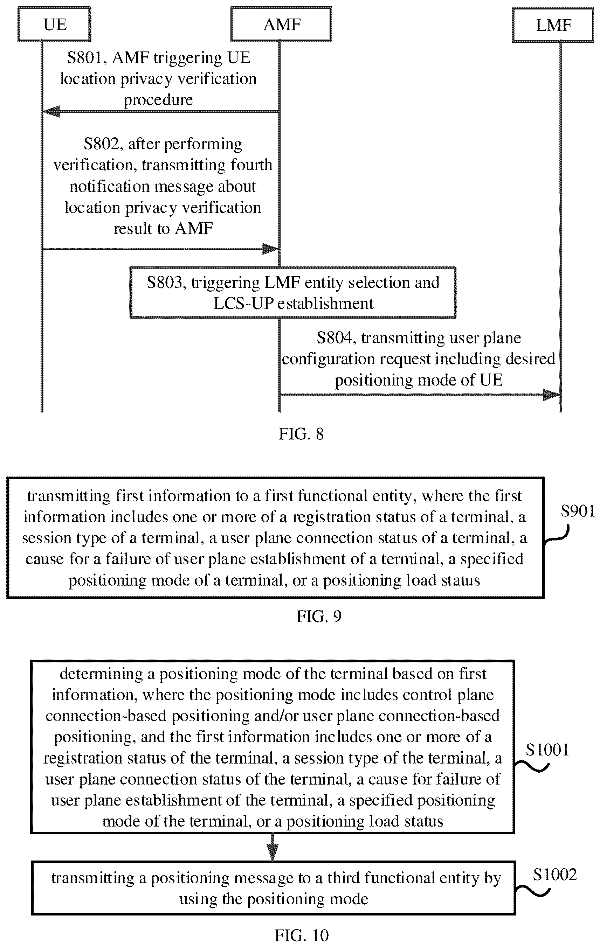

The specific implementation process of using the positioning method described in this implementation may be shown in FIG. 8, including the following steps S801 to S804.

In step S801, an AMF entity triggers terminal location privacy verification procedure through NAS signaling.

In step S802, after performing verification, the terminal transmits a fourth notification message about a location privacy verification result to the AMF entity; where the fourth notification message includes the specified positioning mode of the terminal. In another implementation, the fourth notification message also includes terminal location privacy indication information, indicating whether the terminal allows a subsequent LCS request.

In step S803, the AMF entity triggers LMF entity selection and LCS-UP establishment.

In step S804, the AMF entity transmits a user plane configuration request message (e.g., N1mf_Location_UPConfig(UP info) Request message) to the LMF entity, and the user plane configuration request message includes the specified positioning mode of the terminal.

Based on the above steps, the LMF entity receives the user plane configuration request message and determines the positioning mode of the terminal according to the specified positioning mode of the terminal.

Therefore, in the implementation, the LMF entity and the terminal can determine the positioning mode of the terminal based on the specified positioning mode fed back by the terminal.

Optionally, when determining that the first condition is met, the terminal specifies a positioning mode as control plane connection-based positioning in the fourth notification message transmitted to the second functional entity; or, when determining that the first condition is met, the terminal may transmit a fourth notification message to the second functional entity, and the fourth notification message indicates that the specified positioning mode is control plane connection-based positioning.

Optionally, the first condition includes one or more of the following conditions:
a current remaining battery level of the terminal is less than a first preset value;
an access delay of the terminal is greater than a second preset value;
it is determined that an IoT device refuses to establish a positioning user plane connection for the terminal;
the registration status of the terminal is an emergency status; or
the session type of the terminal is an emergency type.

In another implementation according to the embodiments of the present disclosure, the first information includes a positioning load status, and the first functional entity determines the positioning mode of the terminal based on the positioning load status.

Optionally, the positioning load status includes one or more of the following:
a number of terminals using control plane connection-based positioning;
a number of positioning sessions using control plane connection-based positioning;
a number of terminals using user plane connection-based positioning; or
a number of positioning sessions using user plane connection-based positioning.

In the implementation, the first functional entity (e.g., an LMF entity) may determine the positioning mode of the terminal based on the number of terminals/positioning sessions using user plane connection-based positioning in the positioning load state, and/or the number of terminals/positioning sessions using control plane connection-based positioning, so as to limit the number of terminals or positioning sessions using user plane connection-based positioning or control plane connection-based positioning to a preset threshold.

Similarly, the terminal may obtain the positioning load status from a network side and may determine the positioning mode of the terminal based on the positioning load status.

By using the positioning method described in the embodiments of the present disclosure, the first functional entity and the terminal may determine the positioning mode of the terminal based on one or more of a registration status, a session type, a user plane connection status, a cause for user plane establishment failure, or a specified positioning mode. The positioning method is based on a real-time indication state such as an emergency registration, an emergency call scenario, and a newly added terminal positioning preference indication parameter. It is able to timely determine the positioning mode of the terminal and ensure accurate transmission of a positioning message.

It should be noted that the above-mentioned embodiments of the positioning method described in the present disclosure are only examples and are not limited thereto. Therefore, each possible embodiment will not be described in detail here.

An embodiment of the present disclosure further provides a positioning method, which is performed by a second functional entity. As shown in FIG. 9, the method includes:
step S901, transmitting first information to a first functional entity, where the first information includes one or more of a registration status of a terminal, a session type of the terminal, a user plane connection status of the terminal, a cause for a failure of user plane establishment of the terminal, a specified positioning mode of the terminal, or a positioning load status.

By using the positioning method described in the embodiments of the present disclosure, a second functional entity transmits first information to a first functional entity. In this way, the first functional entity can determine the positioning mode of the terminal based on one or more of the registration status of the terminal, the session type of the terminal, the user plane connection status of the terminal, the cause for the user plane establishment failure of the terminal, and the specified positioning mode of the terminal, so as to timely determine the positioning mode of the terminal based on a real-time status of the terminal and ensure accurate transmission of a positioning message.

Optionally, the positioning method further includes: receiving a first request transmitted by the first functional entity, where the first request is configured to subscribe to the first information, where the transmitting the first information to the first functional entity includes: transmitting a first notification message to the first functional entity, where the first notification message includes one or more of a user plane connection recovery indication for indicating that a user plane connection of the terminal enters an activated state, or the first information subscribed to by the first request.

Optionally, in the positioning method, a registration status in the first information indicates a non-emergency status; and/or a session type in the first information indicates a non-emergency type.

Optionally, the positioning method further includes: transmitting a second request to the first functional entity, when it is determined that the registration status of the terminal is an emergency status and/or the session type of the terminal is an emergency type, where the second request is configured to request that a positioning mode of the terminal is control plane connection-based positioning.

Optionally, in the positioning method, the transmitting the first information to the first functional entity includes: after transmitting a second notification message to the terminal for notifying the terminal to establish a user plane connection, when user plane connection failure information transmitted by the terminal is received, transmitting a third notification message to the first functional entity, where the third notification message includes the first information, and the first information includes one or more of the cause for the failure of user plane establishment of the terminal, or the specified positioning mode of the terminal.

Optionally, the positioning method further includes:
transmitting a location privacy verification notification to the terminal; and
obtaining a fourth notification message transmitted by the terminal based on the location privacy verification notification, where the fourth notification message includes the specified positioning mode of the terminal. The transmitting the first information to the first functional entity includes: transmitting the first information to the first functional entity after obtaining the fourth notification message, and the first information includes the specified positioning mode of the terminal.

Optionally, in the embodiment of the present disclosure, the second functional entity may be, but not limited to, an AMF entity or an NF entity.

The specific implementation of the positioning method described in the embodiments of the present disclosure applied to the second functional entity can be combined with the detailed description of the specific implementation applied to the first functional entity, and will not be repeated here.

An embodiment of the present disclosure further provides a positioning method, which is performed by a terminal. As shown in FIG. 10, the method includes:
step S1001, determining a positioning mode of the terminal based on first information, where the positioning mode includes control plane connection-based positioning and/or user plane connection-based positioning, and the first information includes one or more of a registration status of the terminal, a session type of the terminal, a user plane connection status of the terminal, a cause for failure of user plane establishment of the terminal, a specified positioning mode of the terminal, or a positioning load status; and
step S 1002, transmitting a positioning message to a third functional entity by using the positioning mode.

By using the positioning method described in the embodiments of the present disclosure, the terminal can determine the positioning mode based on one or more of the registration status, the session type, the user plane connection status, the cause for user plane establishment failure, or the specified positioning mode, so as to timely determine the positioning mode based on a real-time status of the terminal and ensure accurate transmission of positioning messages.

Optionally, the third functional entity includes one or more of an LMF entity, an AMF entity, or an NF entity.

Optionally, in the positioning method, in a case that the first information includes the user plane connection status of the terminal, the determining the positioning mode of the terminal based on the first information includes:
determining the positioning mode of the terminal as the control plane connection-based positioning, when the user plane connection of the terminal enters a deactivated state or is released; and/or
determining the positioning mode of the terminal as the user plane connection-based positioning, when the user plane connection of the terminal enters an activated state.

Optionally, in the positioning method, the determining the positioning mode of the terminal based on the first information includes: determining the positioning mode of the terminal as the control plane connection-based positioning, when it is determined that the registration status of the terminal is an emergency status and/or the session type of the terminal is an emergency type.

Optionally, the positioning method further includes:
receiving a second notification message transmitted by a second functional entity, the second notification message being used for notifying the terminal to establish a user plane connection; and
transmitting user plane connection failure information to the second functional entity, when a first condition is met, where the user plane connection failure information includes one or more of the cause for the failure of user plane establishment of the terminal, or the specified positioning mode of the terminal.

Optionally, the positioning method further includes:
receiving a location privacy verification notification transmitted by a second functional entity; and
transmitting a fourth notification message to the second functional entity according to the location privacy verification notification, where the fourth notification message includes the specified positioning mode of the terminal.

Optionally, in the positioning method, the transmitting the fourth notification message to the second functional entity includes: transmitting the fourth notification message to the second functional entity for indicating that the specified positioning mode is the control plane connection-based positioning, when a first condition is met.

Optionally, in the positioning method, where the first condition includes one or more of the following:
a current remaining battery level of the terminal is less than a first preset value;
an access delay of the terminal is greater than a second preset value;
it is determined that an IoT device refuses to establish a positioning user plane connection for the terminal;
the registration status of the terminal is an emergency status; or
the session type of the terminal is an emergency type.

The specific implementation of the positioning method described in the embodiment of the present disclosure applied to the terminal may be combined with the detailed description of the specific implementation applied to the first functional entity, and will not be repeated here.

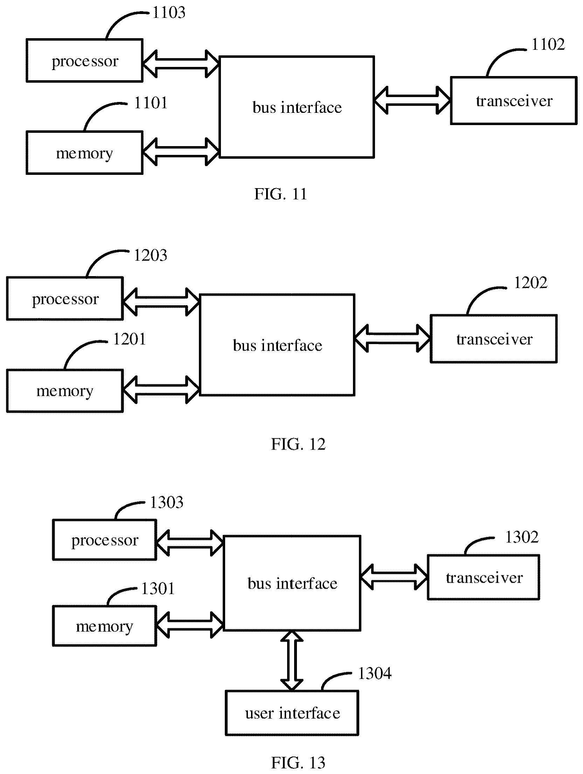

An embodiment of the present disclosure further provides a network device, as shown in FIG. 11, including a memory 1101, a transceiver 1102, and a processor 1103. The memory 1101 is configured to store a computer program. The transceiver 1102 is configured to transmit and receive data under the control of processor 1103. The processor 1103 is configured to read the computer program from the memory 1101 to perform the following step:
determining a positioning mode of a terminal based on first information, where the positioning mode includes control plane connection-based positioning and/or user plane connection-based positioning, and the first information includes one or more of a registration status of the terminal, a session type of the terminal, a user plane connection status of the terminal, a cause for failure of user plane establishment of the terminal, a specified positioning mode of the terminal, or a positioning load status; and
transmitting a positioning message by using the positioning mode.

Optionally, in the network device, in a case that the first information includes the user plane connection status of the terminal, the processor 1103 determining the positioning mode of the terminal based on the first information includes:
determining the positioning mode of the terminal as the control plane connection-based positioning, when the user plane connection of the terminal enters a deactivated state or is released; and/or,
determining the positioning mode of the terminal as the user plane connection-based positioning, when the user plane connection of the terminal enters an activated state.

Optionally, in the network device, the processor 1103 is further configured to: in a case that the user plane connection of the terminal is in the deactivated state or is released, when a positioning message transmitted by the terminal through a user plane is obtained, determine that the user plane connection of the terminal enters the activated state.

Optionally, in the network device, the processor1103 is further configured to:
transmit a first request to a second functional entity, where the first request is configured to subscribe to the first information; and
receive a first notification message transmitted by the second functional entity, where the first notification message includes one or more of a user plane connection recovery indication for indicating that a user plane connection of the terminal enters an activated state, or the first information subscribed to by the first request.

Optionally, in the network device, the processor 1103 is further configured to: receive the first information transmitted by a second functional entity.

Optionally, in the network device, a registration status in the first information indicates a non-emergency status; and/or a session type in the first information indicates a non-emergency type.

Optionally, in the network device, the processor 1103 is further configured to:
receive a second request transmitted by a second functional entity, where the second request is configured to request that the positioning mode of the terminal is the control plane connection-based positioning, and the second request is transmitted in at least one of following cases: the registration status of the terminal is an emergency status or the session type of the terminal is an emergency type; and
transmit the positioning message by using the control plane connection-based positioning according to the second request.

In FIG. 11, the bus architecture may include any number of interconnected buses and bridges. Specifically, various circuits of one or more processors represented by the processor 1103 and a memory represented by the memory 1101 are linked together. The bus architecture may also link various other circuits such as peripheral devices, voltage regulators, power management circuits, etc., which are well-known in the art, and therefore, no further descriptions are provided herein. The bus interface provides an interface. The transceiver 1102 may be a plurality of elements, that is, include a transmitter and a receiver, and provide a unit for communicating with various other devices on a transmission medium. The transmission medium includes a wireless channel, a wired channels, an optical cable and other transmission media. The processor 1103 is responsible for managing the bus architecture and general processing, and the memory 1101 can store the data used by processor 1103 during operation.

The processor 1103 may be a central processing unit (CPU), an application specific integrated circuit (ASIC), a field-programmable gate array (FPGA) or a complex programmable logic device (CPLD). The processor may also adopt a multi-core architecture.

An embodiment of the present disclosure further provides a network device, as shown in FIG. 12, including a memory 1201, a transceiver 1202 and a processor 1203. The memory 1201 is configured to store a computer program; the transceiver 1202 is configured to transmit and receive data under the control of the processor; the processor 1203 is configured to read the computer program from the memory 1201 to perform the following step:
transmitting first information to a first functional entity, where the first information includes one or more of a registration status of a terminal, a session type of the terminal, a user plane connection status of the terminal, a cause for a failure of user plane establishment of the terminal, a specified positioning mode of the terminal, or a positioning load status.

Optionally, in the network device, the processor 1203 is further configured to: receive a first request transmitted by the first functional entity, where the first request is configured to subscribe to the first information, where the processor 1203 transmitting the first information to the first functional entity includes: transmitting a first notification message to the first functional entity, where the first notification message includes one or more of a user plane connection recovery indication for indicating that a user plane connection of the terminal enters an activated state, or the first information subscribed to by the first request.

Optionally, in the network device, a registration status in the first information indicates a non-emergency status; and/or a session type in the first information indicates a non-emergency type.

Optionally, in the network device, the processor 1203 is further configured to: transmit a second request to the first functional entity, when it is determined that the registration status of the terminal is an emergency status and/or the session type of the terminal is an emergency type, where the second request is configured to request that a positioning mode of the terminal is control plane connection-based positioning.

Optionally, in the network device, the processor 1203 transmitting the first information to the first functional entity includes: after transmitting a second notification message to the terminal for notifying the terminal to establish a user plane connection, when user plane connection failure information transmitted by the terminal is received, transmitting a third notification message to the first functional entity, where the third notification message includes the first information, and the first information includes one or more of the cause for the failure of user plane establishment of the terminal, or the specified positioning mode of the terminal.

Optionally, in the network device, the processor 1203 is further configured to:
transmit a location privacy verification notification to the terminal; and
obtain a fourth notification message transmitted by the terminal based on the location privacy verification notification, where the fourth notification message includes the specified positioning mode of the terminal, where the processor 1203 transmitting the first information to the first functional entity includes:
   transmitting the first information to the first functional entity after obtaining the fourth notification message, where the first information includes the specified positioning mode of the terminal.

In FIG. 12, the bus architecture may include any number of interconnected buses and bridges. Specifically, various circuits of one or more processors represented by the processor 1203 and a memory represented by the memory 1201 are linked together. The bus architecture may also link various other circuits such as peripheral devices, voltage regulators, power management circuits, etc., which are well-known in the art, and therefore, no further descriptions are provided herein. The bus interface provides an interface. The transceiver 1202 may be a plurality of elements, that is, include a transmitter and a receiver, and provide a unit for communicating with various other devices on a transmission medium. The transmission medium includes a wireless channel, a wired channels, an optical cable and other transmission media. The processor 1203 is responsible for managing the bus architecture and general processing, and the memory 1201 can store the data used by processor 1203 during operation.

The processor 1203 may be a central processing unit (CPU), an application specific integrated circuit (ASIC), a field-programmable gate array (FPGA) or a complex programmable logic device (CPLD). The processor may also adopt a multi-core architecture.

An embodiment of the present disclosure further provides a terminal, as shown in FIG. 13, including a memory 1301, a transceiver 1302, and a processor 1303. The memory 1301 is configured to store a computer program; the transceiver 1302 is configured to transmit and receive data under the control of the processor 1303; the processor 1303 is configured to read the computer program from the memory 1301 to perform the following steps:
determining a positioning mode of the terminal based on first information, where the positioning mode includes control plane connection-based positioning and/or user plane connection-based positioning, and the first information includes one or more of a registration status of the terminal, a session type of the terminal, a user plane connection status of the terminal, a cause for a failure of user plane establishment of the terminal, a specified positioning mode of the terminal, or a positioning load status; and
transmitting a positioning message to a third functional entity by using the positioning mode.

Optionally, in the terminal, in a case that the first information includes the user plane connection status of the terminal, the processor 1303 determining the positioning mode of the terminal based on the first information includes:
determining the positioning mode of the terminal as the control plane connection-based positioning, when the user plane connection of the terminal enters a deactivated state or is released; and/or
determining the positioning mode of the terminal as the user plane connection-based positioning, when the user plane connection of the terminal enters an activated state.

Optionally, in the terminal, the processor 1303 determining the positioning mode of the terminal based on the first information includes: determining the positioning mode of the terminal as the control plane connection-based positioning, when it is determined that the registration status of the terminal is an emergency status and/or the session type of the terminal is an emergency type.

Optionally, in the terminal, the processor 1303 is further configured to:
receive a second notification message transmitted by a second functional entity, the second notification message being used for notifying the terminal to establish a user plane connection; and
transmit user plane connection failure information to the second functional entity, when a first condition is met, where the user plane connection failure information includes one or more of the cause for the failure of user plane establishment of the terminal, or the specified positioning mode of the terminal.

Optionally, in the terminal, the processor 1303 is further configured to:
receive a location privacy verification notification transmitted by a second functional entity; and
transmit a fourth notification message to the second functional entity according to the location privacy verification notification, where the fourth notification message includes the specified positioning mode of the terminal.

Optionally, in the terminal, the processor 1303 transmitting the fourth notification message to the second functional entity includes: transmitting the fourth notification message to the second functional entity for indicating that the specified positioning mode is the control plane connection-based positioning, when a first condition is met.

Optionally, in the terminal, the first condition includes one or more of the following:
a current remaining battery level of the terminal is less than a first preset value;
an access delay of the terminal is greater than a second preset value;
it is determined that an IoT device refuses to establish a positioning user plane connection for the terminal;
the registration status of the terminal is an emergency status; or
the session type of the terminal is an emergency type.

In FIG. 13, the bus architecture may include any number of interconnected buses and bridges, specifically one or more processors represented by the processor 1303 and various circuits of memory represented by the memory 1301 connected together. The bus architecture may also link various other circuits such as peripheral devices, voltage regulators, power management circuits, etc., which are well-known in the art, and therefore, no further descriptions are provided herein. The bus interface provides an interface. The transceiver 1302 may be a plurality of elements, that is, include a transmitter and a receiver, and provide a unit for communicating with various other devices on a transmission medium. The transmission medium includes a wireless channel, a wired channels, an optical cable and other transmission media. For different user devices, user interface 1304 may also be an interface capable of externally or internally connecting to required equipment. The connected equipment includes but not limited to a keypad, a display, a speaker, a microphone, a joystick, and the like.

The processor 1303 is responsible for managing the bus architecture and usual processing, while the memory 1301 may store the data used by the processor 1303 when performing operations.

Optionally, processor 1303 may be a central processing unit (CPU), an application specific integrated circuit (ASIC), a field-programmable gate array (FPGA) or a complex programmable logic device (CPLD). The processor may also adopt a multi-core architecture.

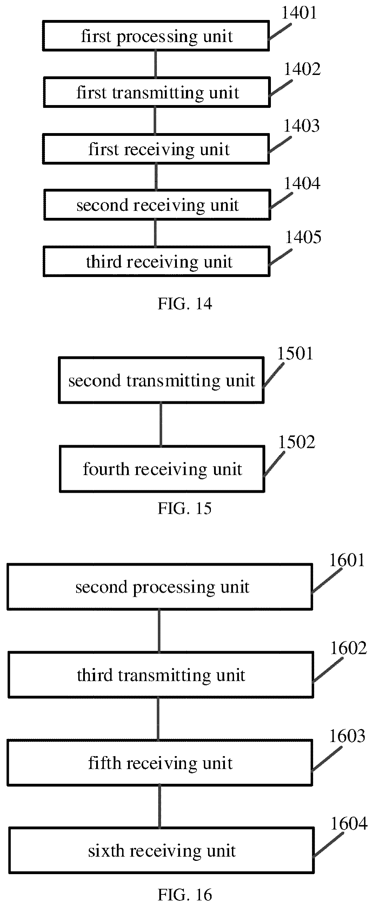

An embodiment of the present disclosure further provides a positioning apparatus, applied to a first functional entity. As shown in FIG. 14, the apparatus includes:
a first processing unit 1401, configured to determine a positioning mode of a terminal based on first information, where the positioning mode includes control plane connection-based positioning and/or user plane connection-based positioning, and the first information includes one or more of a registration status of the terminal, a session type of the terminal, a user plane connection status of the terminal, a cause for a failure of user plane establishment of the terminal, a specified positioning mode of the terminal, or a positioning load status; and
a first transmitting unit 1402, configured to transmit a positioning message by using the positioning mode.

Optionally, in the positioning apparatus, in a case that the first information includes the user plane connection status of the terminal, the first processing unit 1401 determining the positioning mode of the terminal based on the first information includes:
determining the positioning mode of the terminal as the control plane connection-based positioning, when the user plane connection of the terminal enters a deactivated state or is released; and/or,
determining the positioning mode of the terminal as the user plane connection-based positioning, when the user plane connection of the terminal enters an activated state.

Optionally, in the positioning apparatus, the first processing unit 1401 is further configured to: in a case that the user plane connection of the terminal is in the deactivated state or is released, when a positioning message transmitted by the terminal through a user plane is obtained, determine that the user plane connection of the terminal enters the activated state.

Optionally, in the positioning apparatus, where the first transmitting unit 1402 is further configured to: transmit a first request to a second functional entity, where the first request is configured to subscribe to the first information; and the positioning apparatus further includes a first receiving unit 1403, configured to receive a first notification message transmitted by the second functional entity, where the first notification message includes one or more of a user plane connection recovery indication for indicating that a user plane connection of the terminal enters an activated state, or the first information subscribed to by the first request.

Optionally, the positioning apparatus further includes: a second receiving unit 1404, configured to receive the first information transmitted by a second functional entity.

Optionally, in the positioning apparatus, a registration status in the first information indicates a non-emergency status; and/or a session type in the first information indicates a non-emergency type.

Optionally, in the positioning apparatus further includes: a third receiving unit 1405, configured to receive a second request transmitted by a second functional entity, where the second request is configured to request that the positioning mode of the terminal is the control plane connection-based positioning, and the second request is transmitted in at least one of following cases: the registration status of the terminal is an emergency status or the session type of the terminal is an emergency type.

The first transmitting unit 1402 is further configured to transmit the positioning message by using the control plane connection-based positioning according to the second request.

An embodiment of the present disclosure further provides a positioning apparatus, applied to a second functional entity. As shown in FIG. 15, the positioning apparatus includes: a second transmitting unit 1501, configured to transmit first information to a first functional entity, where the first information includes one or more of a registration status of a terminal, a session type of the terminal, a user plane connection status of the terminal, a cause for a failure of user plane establishment of the terminal, a specified positioning mode of the terminal, or a positioning load status.

Optionally, the positioning apparatus further includes: a fourth receiving unit 1502, configured to receive a first request transmitted by the first functional entity, where the first request is configured to subscribe to the first information, and the second transmitting unit 1501 transmitting the first information to the first functional entity includes: transmitting a first notification message to the first functional entity, where the first notification message includes one or more of a user plane connection recovery indication for indicating that a user plane connection of the terminal enters an activated state, or the first information subscribed to by the first request.

Optionally, in the positioning apparatus, a registration status in the first information indicates a non-emergency status; and/or a session type in the first information indicates a non-emergency type.

Optionally, in the positioning apparatus, where the second transmitting unit 1501 is further configured to: transmit a second request to the first functional entity, when it is determined that the registration status of the terminal is an emergency status and/or the session type of the terminal is an emergency type, where the second request is configured to request that a positioning mode of the terminal is control plane connection-based positioning.

Optionally, in the positioning apparatus, where the second transmitting unit 1501 transmitting the first information to the first functional entity includes: after transmitting a second notification message to the terminal for notifying the terminal to establish a user plane connection, when user plane connection failure information transmitted by the terminal is received, transmitting a third notification message to the first functional entity, where the third notification message includes the first information, and the first information includes one or more of the cause for the failure of user plane establishment of the terminal, or the specified positioning mode of the terminal.

Optionally, in the positioning apparatus, where the second transmitting unit 1501 is further configured to:
transmit a location privacy verification notification to the terminal; and
obtain a fourth notification message transmitted by the terminal based on the location privacy verification notification, where the fourth notification message includes the specified positioning mode of the terminal,
where the second transmitting unit 1501 transmitting the first information to the first functional entity includes: transmitting the first information to the first functional entity after obtaining the fourth notification message, where the first information includes the specified positioning mode of the terminal.

An embodiment of the present disclosure further provides a positioning apparatus, applied to a terminal. As shown in FIG. 16, the apparatus includes:
a second processing unit 1601, configured to determine a positioning mode of the terminal based on first information, where the positioning mode includes control plane connection-based positioning and/or user plane connection-based positioning, and the first information includes one or more of a registration status of the terminal, a session type of the terminal, a user plane connection status of the terminal, a cause for a failure of user plane establishment of the terminal, a specified positioning mode of the terminal, or a positioning load status; and
a third transmitting unit 1602, configured to transmit a positioning message to a third functional entity by using the positioning mode.

Optionally, in the positioning apparatus, in a case that the first information includes the user plane connection status of the terminal, the second processing unit 1601 determining the positioning mode of the terminal based on the first information includes:
determining the positioning mode of the terminal as the control plane connection-based positioning, when the user plane connection of the terminal enters a deactivated state or is released; and/or
determining the positioning mode of the terminal as the user plane connection-based positioning, when the user plane connection of the terminal enters an activated state.

Optionally, in the positioning apparatus, where the second processing unit 1601 determining the positioning mode of the terminal based on the first information includes: determining the positioning mode of the terminal as the control plane connection-based positioning, when it is determined that the registration status of the terminal is an emergency status and/or the session type of the terminal is an emergency type.

Optionally, the positioning apparatus further includes: a fifth receiving unit 1603, configured to receive a second notification message transmitted by a second functional entity, the second notification message being used for notifying the terminal to establish a user plane connection, and the third transmitting unit 1602 is further configured to transmit user plane connection failure information to the second functional entity, when a first condition is met, where the user plane connection failure information includes one or more of the cause for the failure of user plane establishment of the terminal, or the specified positioning mode of the terminal.

Optionally, the positioning apparatus further includes: a sixth receiving unit 1604, configured to receive a location privacy verification notification transmitted by a second functional entity, and the third transmitting unit 1602 is further configured to transmit a fourth notification message to the second functional entity according to the location privacy verification notification, where the fourth notification message includes the specified positioning mode of the terminal.

Optionally, in the positioning apparatus, where the third transmitting unit 1602 transmitting the fourth notification message to the second functional entity includes: transmitting the fourth notification message to the second functional entity for indicating that the specified positioning mode is the control plane connection-based positioning, when a first condition is met.

Optionally, in the positioning apparatus, the first condition includes one or more of the following:
a current remaining battery level of the terminal is less than a first preset value;
an access delay of the terminal is greater than a second preset value;
it is determined that an IoT device refuses to establish a positioning user plane connection for the terminal;
the registration status of the terminal is an emergency status; or
the session type of the terminal is an emergency type.

It should be noted that the above apparatus provided in the embodiment of the present disclosure can implement all method steps implemented in the above method embodiments, and can achieve the same technical effects. Therefore, the description and the beneficial effect of this embedment that are the same as the method embodiments will not be introduced here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

An embodiment of the present disclosure further provides a processor readable storage medium, where the processor readable storage medium stores a computer program. The computer program is used for causing a processor to execute the above positioning method.

The processor readable storage medium may be any available medium or data storage device that can be accessed by the processor, including but not limited to magnetic storage (e.g., floppy disk, hard disk, magnetic tape, magneto-optical disk (MO)), optical storage (e.g., compact disc (CD), digital versatile disc (DVD), blue-ray disc (BD), high-definition versatile disc (HVD)), and semiconductor memory (e.g., ROM, erasable programmable ROM (EPROM), electrically erasable programmable ROM (EEPROM), non-volatile memory (NAND FLASH), solid-state drive (SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

**It** should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, e.g., one or more application specific integrated circuits (ASIC), or one or more microprocessors (DSP), or one or more field programmable gate arrays (FPGA). As another example, when a module described above is implemented in the form of program codes called by a processing element, the processing element may be a general purpose processor, e.g., a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A positioning method, performed by a first functional entity, comprising:
determining a positioning mode of a terminal based on first information, wherein the positioning mode comprises control plane connection-based positioning and/or user plane connection-based positioning, and the first information comprises one or more of a registration status of the terminal, a session type of the terminal, a user plane connection status of the terminal, a cause for a failure of user plane establishment of the terminal, a specified positioning mode of the terminal, or a positioning load status; and
transmitting a positioning message by using the positioning mode.

2. The positioning method according to claim 1, wherein in a case that the first information comprises the user plane connection status of the terminal, the determining the positioning mode of the terminal based on the first information comprises:
determining the positioning mode of the terminal as the control plane connection-based positioning, when the user plane connection of the terminal enters a deactivated state or is released; and/or,
determining the positioning mode of the terminal as the user plane connection-based positioning, when the user plane connection of the terminal enters an activated state.

3. The positioning method according to claim 2, further comprising:
in a case that the user plane connection of the terminal is in the deactivated state or is released, when a positioning message transmitted by the terminal through a user plane is obtained, determining that the user plane connection of the terminal enters the activated state.

4. The positioning method according to claim 1, further comprising:
transmitting a first request to a second functional entity, wherein the first request is configured to subscribe to the first information; and
receiving a first notification message transmitted by the second functional entity, wherein the first notification message comprises one or more of a user plane connection recovery indication for indicating that a user plane connection of the terminal enters an activated state, or the first information subscribed to by the first request.

5. The positioning method according to claim 1, further comprising:
receiving the first information transmitted by a second functional entity.

6. The positioning method according to claim 5, wherein a registration status in the first information indicates a non-emergency status; and/or
a session type in the first information indicates a non-emergency type.

7. The positioning method according to claim 1 or 6, further comprising:
receiving a second request transmitted by a second functional entity, wherein the second request is configured to request that the positioning mode of the terminal is the control plane connection-based positioning, and the second request is transmitted in at least one of following cases: the registration status of the terminal is an emergency status or the session type of the terminal is an emergency type; and
transmitting the positioning message by using the control plane connection-based positioning according to the second request.

8. A positioning method, performed by a second functional entity, comprising:
transmitting first information to a first functional entity, wherein the first information comprises one or more of a registration status of a terminal, a session type of the terminal, a user plane connection status of the terminal, a cause for a failure of user plane establishment of the terminal, a specified positioning mode of the terminal, or a positioning load status.

9. The positioning method according to claim 8, further comprising:
receiving a first request transmitted by the first functional entity, wherein the first request is configured to subscribe to the first information,
wherein the transmitting the first information to the first functional entity comprises:
transmitting a first notification message to the first functional entity, wherein the first notification message comprises one or more of a user plane connection recovery indication for indicating that a user plane connection of the terminal enters an activated state, or the first information subscribed to by the first request.

10. The positioning method according to claim 8, wherein a registration status in the first information indicates a non-emergency status; and/or
a session type in the first information indicates a non-emergency type.

11. The positioning method according to claim 8 or 10, further comprising:
transmitting a second request to the first functional entity, when it is determined that the registration status of the terminal is an emergency status and/or the session type of the terminal is an emergency type, wherein the second request is configured to request that a positioning mode of the terminal is control plane connection-based positioning.

12. The positioning method according to claim 8, wherein the transmitting the first information to the first functional entity comprises:
after transmitting a second notification message to the terminal for notifying the terminal to establish a user plane connection, when user plane connection failure information transmitted by the terminal is received, transmitting a third notification message to the first functional entity,
wherein the third notification message comprises the first information, and the first information comprises one or more of the cause for the failure of user plane establishment of the terminal, or the specified positioning mode of the terminal.

13. The positioning method according to claim 8, further comprising:
transmitting a location privacy verification notification to the terminal; and
obtaining a fourth notification message transmitted by the terminal based on the location privacy verification notification, wherein the fourth notification message comprises the specified positioning mode of the terminal,
wherein the transmitting the first information to the first functional entity comprises:
transmitting the first information to the first functional entity after obtaining the fourth notification message, wherein the first information comprises the specified positioning mode of the terminal.

14. A positioning method, performed by a terminal, comprising:
determining a positioning mode of the terminal based on first information, wherein the positioning mode comprises control plane connection-based positioning and/or user plane connection-based positioning, and the first information comprises one or more of a registration status of the terminal, a session type of the terminal, a user plane connection status of the terminal, a cause for a failure of user plane establishment of the terminal, a specified positioning mode of the terminal, or a positioning load status; and
transmitting a positioning message to a third functional entity by using the positioning mode.

15. The positioning method according to claim 14, wherein in a case that the first information comprises the user plane connection status of the terminal, the determining the positioning mode of the terminal based on the first information comprises:
determining the positioning mode of the terminal as the control plane connection-based positioning, when the user plane connection of the terminal enters a deactivated state or is released; and/or
determining the positioning mode of the terminal as the user plane connection-based positioning, when the user plane connection of the terminal enters an activated state.

16. The positioning method according to claim 14, wherein the determining the positioning mode of the terminal based on the first information comprises:
determining the positioning mode of the terminal as the control plane connection-based positioning, when it is determined that the registration status of the terminal is an emergency status and/or the session type of the terminal is an emergency type.

17. The positioning method according to claim 14, further comprising:
receiving a second notification message transmitted by a second functional entity, the second notification message being used for notifying the terminal to establish a user plane connection; and
transmitting user plane connection failure information to the second functional entity, when a first condition is met, wherein the user plane connection failure information comprises one or more of the cause for the failure of user plane establishment of the terminal, or the specified positioning mode of the terminal.

18. The positioning method according to claim 14, further comprising:
receiving a location privacy verification notification transmitted by a second functional entity; and
transmitting a fourth notification message to the second functional entity according to the location privacy verification notification, wherein the fourth notification message comprises the specified positioning mode of the terminal.

19. The positioning method according to claim 18, wherein the transmitting the fourth notification message to the second functional entity comprises:
transmitting the fourth notification message to the second functional entity for indicating that the specified positioning mode is the control plane connection-based positioning, when a first condition is met.

20. The positioning method according to claim 17 or 19, wherein the first condition comprises one or more of the following:
a current remaining battery level of the terminal is less than a first preset value;
an access delay of the terminal is greater than a second preset value;
it is determined that an Internet of things (IoT) device refuses to establish a positioning user plane connection for the terminal;
the registration status of the terminal is an emergency status; or
the session type of the terminal is an emergency type.

21. A network device, comprising: a memory, a transceiver and a processor,
wherein the memory is configured to store a computer program; the transceiver is configured to receive and transmit data under the control of the processor; and the processor is configured to read the computer program from the memory to perform the following steps:
determining a positioning mode of a terminal based on first information, wherein the positioning mode comprises control plane connection-based positioning and/or user plane connection-based positioning, and the first information comprises one or more of a registration status of the terminal, a session type of the terminal, a user plane connection status of the terminal, a cause for a failure of user plane establishment of the terminal, a specified positioning mode of the terminal, or a positioning load status; and
transmitting a positioning message by using the positioning mode.

22. The network device according to claim 21, wherein in a case that the first information comprises the user plane connection status of the terminal, the determining the positioning mode of the terminal based on the first information comprises:
determining the positioning mode of the terminal as the control plane connection-based positioning, when the user plane connection of the terminal enters a deactivated state or is released; and/or,
determining the positioning mode of the terminal as the user plane connection-based positioning, when the user plane connection of the terminal enters an activated state.

23. The network device according to claim 22, wherein the processor is further configured to:
in a case that the user plane connection of the terminal is in the deactivated state or is released, when a positioning message transmitted by the terminal through a user plane is obtained, determine that the user plane connection of the terminal enters the activated state.

24. The network device according to claim 21, wherein the processor is further configured to:
transmit a first request to a second functional entity, wherein the first request is configured to subscribe to the first information; and
receive a first notification message transmitted by the second functional entity, wherein the first notification message comprises one or more of a user plane connection recovery indication for indicating that a user plane connection of the terminal enters an activated state, or the first information subscribed to by the first request.

25. The network device according to claim 21, wherein the processor is further configured to:
receive the first information transmitted by a second functional entity.

26. The network device according to claim 25, wherein a registration status in the first information indicates a non-emergency status; and/or
a session type in the first information indicates a non-emergency type.

27. The network device according to claim 21 or 26, wherein the processor is further configured to:
receive a second request transmitted by a second functional entity, wherein the second request is configured to request that the positioning mode of the terminal is the control plane connection-based positioning, and the second request is transmitted in at least one of following cases: the registration status of the terminal is an emergency status or the session type of the terminal is an emergency type; and
transmit the positioning message by using the control plane connection-based positioning according to the second request.

28. A network device, comprising: a memory, a transceiver and a processor,
wherein the memory is configured to store a computer program; the transceiver is configured to receive and transmit data under the control of the processor; and the processor is configured to read the computer program from the memory to perform the following step:
transmitting first information to a first functional entity, wherein the first information comprises one or more of a registration status of a terminal, a session type of the terminal, a user plane connection status of the terminal, a cause for a failure of user plane establishment of the terminal, a specified positioning mode of the terminal, or a positioning load status.

29. The network device according to claim 28, wherein the processor is further configured to:
receive a first request transmitted by the first functional entity, wherein the first request is configured to subscribe to the first information,
wherein the transmitting the first information to the first functional entity comprises:
transmitting a first notification message to the first functional entity, wherein the first notification message comprises one or more of a user plane connection recovery indication for indicating that a user plane connection of the terminal enters an activated state, or the first information subscribed to by the first request.

30. The network device according to claim 28, wherein a registration status in the first information indicates a non-emergency status; and/or
a session type in the first information indicates a non-emergency type.

31. The network device according to claim 28 or 30, wherein the processor is further configured to:
transmit a second request to the first functional entity, when it is determined that the registration status of the terminal is an emergency status and/or the session type of the terminal is an emergency type, wherein the second request is configured to request that a positioning mode of the terminal is control plane connection-based positioning.

32. The network device according to claim 28, wherein the transmitting the first information to the first functional entity comprises:
after transmitting a second notification message to the terminal for notifying the terminal to establish a user plane connection, when user plane connection failure information transmitted by the terminal is received, transmitting a third notification message to the first functional entity,
wherein the third notification message comprises the first information, and the first information comprises one or more of the cause for the failure of user plane establishment of the terminal, or the specified positioning mode of the terminal.

33. The network device according to claim 28, wherein the processor is further configured to:
transmit a location privacy verification notification to the terminal; and
obtain a fourth notification message transmitted by the terminal based on the location privacy verification notification, wherein the fourth notification message comprises the specified positioning mode of the terminal,
wherein the transmitting the first information to the first functional entity comprises:
transmitting the first information to the first functional entity after obtaining the fourth notification message, wherein the first information comprises the specified positioning mode of the terminal.

34. A terminal, comprising: a memory, a transceiver and a processor,
wherein the memory is configured to store a computer program; the transceiver is configured to receive and transmit data under the control of the processor; and the processor is configured to read the computer program from the memory to perform the following steps:
determining a positioning mode of the terminal based on first information, wherein the positioning mode comprises control plane connection-based positioning and/or user plane connection-based positioning, and the first information comprises one or more of a registration status of the terminal, a session type of the terminal, a user plane connection status of the terminal, a cause for a failure of user plane establishment of the terminal, a specified positioning mode of the terminal, or a positioning load status; and
transmitting a positioning message to a third functional entity by using the positioning mode.

35. The terminal according to claim 34, wherein in a case that the first information comprises the user plane connection status of the terminal, the determining the positioning mode of the terminal based on the first information comprises:
determining the positioning mode of the terminal as the control plane connection-based positioning, when the user plane connection of the terminal enters a deactivated state or is released; and/or
determining the positioning mode of the terminal as the user plane connection-based positioning, when the user plane connection of the terminal enters an activated state.

36. The terminal according to claim 34, wherein the determining the positioning mode of the terminal based on the first information comprises:
determining the positioning mode of the terminal as the control plane connection-based positioning, when it is determined that the registration status of the terminal is an emergency status and/or the session type of the terminal is an emergency type.

37. The terminal according to claim 34, wherein the processor is further configured to:
receive a second notification message transmitted by a second functional entity, the second notification message being used for notifying the terminal to establish a user plane connection; and
transmit user plane connection failure information to the second functional entity, when a first condition is met, wherein the user plane connection failure information comprises one or more of the cause for the failure of user plane establishment of the terminal, or the specified positioning mode of the terminal.

38. The terminal according to claim 34, wherein the processor is further configured to:
receive a location privacy verification notification transmitted by a second functional entity; and
transmit a fourth notification message to the second functional entity according to the location privacy verification notification, wherein the fourth notification message comprises the specified positioning mode of the terminal.

39. The terminal according to claim 38, wherein the transmitting the fourth notification message to the second functional entity comprises:
transmitting the fourth notification message to the second functional entity for indicating that the specified positioning mode is the control plane connection-based positioning, when a first condition is met.

40. The terminal according to claim 37 or 39, wherein the first condition comprises one or more of the following:
a current remaining battery level of the terminal is less than a first preset value;
an access delay of the terminal is greater than a second preset value;
it is determined that an Internet of things (IoT) device refuses to establish a positioning user plane connection for the terminal;
the registration status of the terminal is an emergency status; or
the session type of the terminal is an emergency type.

41. A positioning apparatus, applied to a first functional entity, comprising:
a first processing unit, configured to determine a positioning mode of a terminal based on first information, wherein the positioning mode comprises control plane connection-based positioning and/or user plane connection-based positioning, and the first information comprises one or more of a registration status of the terminal, a session type of the terminal, a user plane connection status of the terminal, a cause for a failure of user plane establishment of the terminal, a specified positioning mode of the terminal, or a positioning load status; and
a first transmitting unit, configured to transmit a positioning message by using the positioning mode.

42. The positioning apparatus according to claim 41, wherein in a case that the first information comprises the user plane connection status of the terminal, the first processing unit is further configured to:
determine the positioning mode of the terminal as the control plane connection-based positioning, when the user plane connection of the terminal enters a deactivated state or is released; and/or,
determine the positioning mode of the terminal as the user plane connection-based positioning, when the user plane connection of the terminal enters an activated state.

43. The positioning apparatus according to claim 42, wherein the first processing unit is further configured to:
in a case that the user plane connection of the terminal is in the deactivated state or is released, when a positioning message transmitted by the terminal through a user plane is obtained, determine that the user plane connection of the terminal enters the activated state.

44. The positioning apparatus according to claim 41, wherein the first transmitting unit is further configured to:
transmit a first request to a second functional entity, wherein the first request is configured to subscribe to the first information; and
the positioning apparatus further comprises:
a first receiving unit, configured to receive a first notification message transmitted by the second functional entity, wherein the first notification message comprises one or more of a user plane connection recovery indication for indicating that a user plane connection of the terminal enters an activated state, or the first information subscribed to by the first request.

45. The positioning apparatus according to claim 41, further comprising:
a second receiving unit, configured to receive the first information transmitted by a second functional entity.

46. The positioning apparatus according to claim 45, wherein a registration status in the first information indicates a non-emergency status; and/or
a session type in the first information indicates a non-emergency type.

47. The positioning apparatus according to claim 41 or 46, further comprising:
a third receiving unit, configured to receive a second request transmitted by a second functional entity, wherein the second request is configured to request that the positioning mode of the terminal is the control plane connection-based positioning, and the second request is transmitted in at least one of following cases: the registration status of the terminal is an emergency status or the session type of the terminal is an emergency type,
wherein the first transmitting unit is further configured to transmit the positioning message by using the control plane connection-based positioning according to the second request.

48. A positioning apparatus, applied to a second functional entity, comprising:
a second transmitting unit, configured to transmit first information to a first functional entity, wherein the first information comprises one or more of a registration status of a terminal, a session type of the terminal, a user plane connection status of the terminal, a cause for a failure of user plane establishment of the terminal, a specified positioning mode of the terminal, or a positioning load status.

49. The positioning apparatus according to claim 48, further comprising:
a fourth receiving unit, configured to receive a first request transmitted by the first functional entity, wherein the first request is configured to subscribe to the first information,
wherein the second transmitting unit is further configured to:
transmit a first notification message to the first functional entity, wherein the first notification message comprises one or more of a user plane connection recovery indication for indicating that a user plane connection of the terminal enters an activated state, or the first information subscribed to by the first request.

50. The positioning apparatus according to claim 48, wherein a registration status in the first information indicates a non-emergency status; and/or
a session type in the first information indicates a non-emergency type.

51. The positioning apparatus according to claim 48 or 50, wherein the second transmitting unit is further configured to:
transmit a second request to the first functional entity, when it is determined that the registration status of the terminal is an emergency status and/or the session type of the terminal is an emergency type, wherein the second request is configured to request that a positioning mode of the terminal is control plane connection-based positioning.

52. The positioning apparatus according to claim 48, wherein the second transmitting unit is further configured to:
after transmitting a second notification message to the terminal for notifying the terminal to establish a user plane connection, when user plane connection failure information transmitted by the terminal is received, transmit a third notification message to the first functional entity,
wherein the third notification message comprises the first information, and the first information comprises one or more of the cause for the failure of user plane establishment of the terminal, or the specified positioning mode of the terminal.

53. The positioning apparatus according to claim 48, wherein the second transmitting unit is further configured to:
transmit a location privacy verification notification to the terminal; and
obtain a fourth notification message transmitted by the terminal based on the location privacy verification notification, wherein the fourth notification message comprises the specified positioning mode of the terminal,
wherein the second transmitting unit is further configured to:
transmit the first information to the first functional entity after obtaining the fourth notification message, wherein the first information comprises the specified positioning mode of the terminal.

54. A positioning apparatus, applied to a terminal, comprising:
a second processing unit, configured to determine a positioning mode of the terminal based on first information, wherein the positioning mode comprises control plane connection-based positioning and/or user plane connection-based positioning, and the first information comprises one or more of a registration status of the terminal, a session type of the terminal, a user plane connection status of the terminal, a cause for a failure of user plane establishment of the terminal, a specified positioning mode of the terminal, or a positioning load status; and
a third transmitting unit, configured to transmit a positioning message to a third functional entity by using the positioning mode.

55. The positioning apparatus according to claim 54, wherein in a case that the first information comprises the user plane connection status of the terminal, the second processing unit is further configured to:
determine the positioning mode of the terminal as the control plane connection-based positioning, when the user plane connection of the terminal enters a deactivated state or is released; and/or
determine the positioning mode of the terminal as the user plane connection-based positioning, when the user plane connection of the terminal enters an activated state.

56. The positioning apparatus according to claim 54, wherein the second processing unit is further configured to:
determine the positioning mode of the terminal as the control plane connection-based positioning, when it is determined that the registration status of the terminal is an emergency status and/or the session type of the terminal is an emergency type.

57. The positioning apparatus according to claim 54, further comprising:
a fifth receiving unit, configured to receive a second notification message transmitted by a second functional entity, the second notification message being used for notifying the terminal to establish a user plane connection,
wherein the third transmitting unit is further configured to transmit user plane connection failure information to the second functional entity, when a first condition is met, wherein the user plane connection failure information comprises one or more of the cause for the failure of user plane establishment of the terminal, or the specified positioning mode of the terminal.

58. The positioning apparatus according to claim 54, further comprising:
a sixth receiving unit, configured to receive a location privacy verification notification transmitted by a second functional entity,
wherein the third transmitting unit is further configured to transmit a fourth notification message to the second functional entity according to the location privacy verification notification, wherein the fourth notification message comprises the specified positioning mode of the terminal.

59. The positioning apparatus according to claim 58, wherein the third transmitting unit is further configured to:
transmit the fourth notification message to the second functional entity for indicating that the specified positioning mode is the control plane connection-based positioning, when a first condition is met.

60. The positioning apparatus according to claim 57 or 59, wherein the first condition comprises one or more of the following:
a current remaining battery level of the terminal is less than a first preset value;
an access delay of the terminal is greater than a second preset value;
it is determined that an IoT device refuses to establish a positioning user plane connection for the terminal;
the registration status of the terminal is an emergency status; or
the session type of the terminal is an emergency type.

61. A processor readable storage medium, wherein the processor readable storage medium stores a computer program, and the computer program is configured to cause a processor to perform steps of the positioning method according to any one of claims 1 to 7, or to perform steps of the positioning method according to any one of claims 8 to 13, or to perform steps of the positioning method according to any one of claims 14 to 20.
